# EUROPÄISCHE PATENTSCHRIFT

(11) **EP 2 868 428 B1**
(45) Veröffentlichungstag und Bekanntmachung des Hinweises auf die Patenterteilung: **01.02.2017**
(21) Anmeldenummer: 14455005.0
(22) Anmeldetag: 17.09.2014
(51) Int. Cl.: B23P 15/40, B02C 18/18, B27G 13/04, B27L 11/00

(54) **Verfahren zur Herstellung von Schneidmessern**
Method for producing cutting blades
Procédé de fabrication de lames de coupe

(30) Priorität: 05.11.2013 AT 507312013
(43) Veröffentlichungstag der Anmeldung: 06.05.2015
(73) Patentinhaber: Böhler Profil GmbH, 3333 Böhlerwerk (AT)
(72) Erfinder: Maisser, Helmut, 3365 Allhartsberg (AT); Ponemayr, Helmut, 4400 Steyr (AT)
(74) Vertreter: Naefe, Jan Robert

(56) Entgegenhaltungen:
- EP-A2- 1 358 980
- EP-A2- 1 920 875
- WO-A1-2011/063435
- DE-A1-102005 003 366
- DE-C1- 19 605 072
- GB-A- 2 066 729
- US-A1- 2009 200 411

## Beschreibung

Die Erfindung bezieht sich auf ein Verfahren zur Herstellung von Einweg-Schneidmessern mit profiliertem Querschnitt für eine Einrichtung zum Spanen von Holz.

Weiters betrifft die Erfindung ein Einweg-Schneidmesser mit profiliertem Querschnitt für Einrichtungen zum Spanen von Holz, umfassend einen Grundkörper mit in Längsrichtung mindestens einem maßgenauen Führungspfad sowie diesem gegenüberliegend mindestens einer Druckfläche und mindestens einem zum Führungspfad beabstandeten Kantenbereich mit einer Schneidkante.

Für eine Herstellung von OSB-Spanplatten (Oriented Strand Boards)-Platten mit hoher Güte ist die Qualität des Rohmaterials, also der Späne, von besonderer Wichtigkeit. Weiters sollte bei einer Spanerzeugung der Anfall von Splitterpartikeln möglichst gering gehalten werden. Daraus ergeben sich die Hauptforderungen für eine Zerspanung des Grundwerkstoffes Holz und zwar Gleichmäßigkeit der Späne betreffend die Dicke und die Länge derselben mit geradlinigen Schnitten.

Eine konstante Dicke der Späne und deren Oberflächengüte können im Langzeitbetrieb einer Span-Einrichtung durch die Schneidhaltigkeit der Messer erreicht werden.

*Die* EP 1920875 A2 *offenbart ein Verfahren zur Herstellung von Schneidmessern mit profiliertem Querschnitt zum Zerspanen insbesondere von Holz sowie ein Messer dafür, wobei das Messer abmessungsgenau hergestellt wird und einen Grundkörper mit hoher Festigkeit und einen Schneidenbereich mit hoher Härte aufweist. Eine Herstellung eines derartigen Schneidmessers erfolgt dabei in zwei Schritten, wobei im ersten Schritt ein Grundkörper mit hoher Festigkeit gefertigt wird und im zweiten Schritt die Schneidkantenbereiche gehärtet, angelassen und abmessungsgenau geschliffen werden.*

Für eine erforderliche Spanlänge werden Ritzmesser bzw. Ritzklingen eingesetzt, die vor einer Abspanung des Holz-Vormaterials dieses einritzen, wodurch die entstehenden Späne eine gewünschte bzw. eine etwa gleiche Länge aufweisen.

In dem meist scheibenförmigen Arbeitsteil einer Einrichtung zum Spanen von Holz werden vielfach Schneidmesser und Ritzmesser bzw. Ritzklingen mit senkrecht zueinander gerichteten Schneiden getrennt am Flugkreis positioniert.

*Eine spanerzeugende Zerkleinerungsmaschine mit Schneidmessern und mit Ritzmesser ist aus der* DE 10 2005 003066 A1 *bekannt geworden, wobei das Schneidmesser aus einem Klingenträger und einem Klingenaufsatz, der als Ritzmesser fungiert, besteht und der Klingenaufsatz formschlüssig mit dem Klingenträger korrespondiert.*

Im Betrieb obiger Einrichtungen kann ein unterschiedlicher Verschleiß der Schneid- und Ritzmesser erfolgen, wodurch entweder die Spangüte sinkt oder ein aufwändiger Austausch der schadhaften Klingen erfolgen muss.

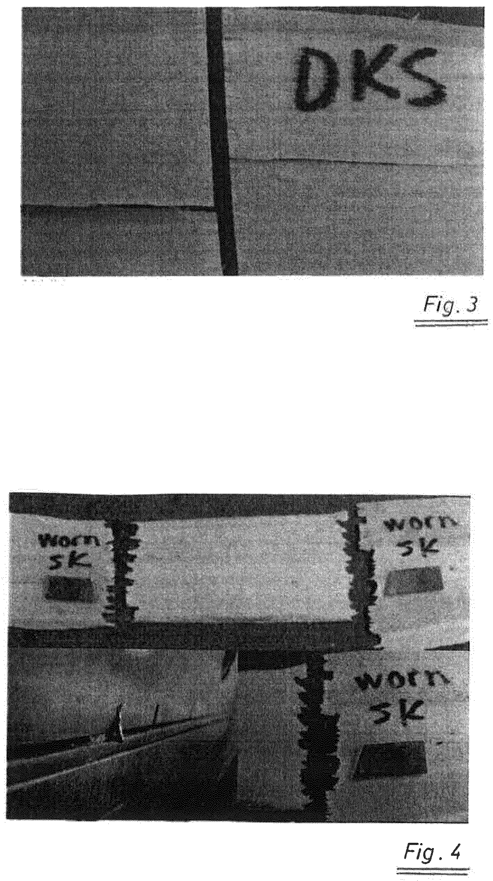

Zur Veranschaulichung sind in Fig. 3 Holzspäne, die durch einwandfreie Messer abgetrennt wurden, und in Fig. 4 die Wirkung von verschlissenen Ritzmessern auf den Spanschnitt ersichtlich.

Um die Wirtschaftlichkeit des Betriebes einer Einrichtung zum Spanen von Holz zu erhöhen, wurde schon versucht, die Ritzklingen in Form eines integralen Bestandteiles im Abspanungswerkzeug vorzusehen.

Gemäß EP 1 358 980 A wird vorgeschlagen, das Herstellen und Nachschärfen von zweidimensional wirkenden Messern für Zerspanmaschinen und damit die Herstellung von Spänen zu optimieren. Diese Messer weisen eine Hauptschneide und mindestens eine Trennschneide auf, sind einstückig ausgeführt und schleiftechnisch problemlos aus handelsüblichen Standardklingen in einem Stück herzustellen.

Allerdings haben derartige Schneidmesser, die am Markt nicht allgemein verfügbar sind, gravierende Nachteile.

Ein genaues Spannen der handelsüblichen Standardklingen für eine Herstellung eines Messers und ein exaktes Einspannen der gefertigten oder nachgeschliffenen Klingen im Messerträger ist nur mit großem Aufwand realisierbar, weil die Messer über Reibschluss mittels einer Klemmplatte gehalten werden und bei Rotationen des Messerkranzes stoßartig Spankräfte auf jedes Messer wirken, welche diese verschieben können. In der Folge können die Spandicken unterschiedlich anfallen.

Handelsübliche Standardklingen sind Walzprodukte, deren Verformungsrichtung letztlich der Hauptschneidenrichtung entspricht und ungünstig auf eine Schneidenhaltbarkeit wirken kann.

Weiters ist ein Beschleifen einer gegebenenfalls gehärteten Standardklinge ungünstig, weil ein Schleifabtrag im dünnen Schneidenbereich des Messers eine Werkstofferwärmung, die zu einem Erweichen desselben führt, erbringen kann. Dies gilt insbesondere für die Trennschneiden, die gegebenenfalls dadurch einen höheren Verschleiß nach kurzem Einsatz aufweisen.

Die vorliegende Erfindung setzt sich zum Ziel, ein Verfahren zur Herstellung von Einweg-Wendeschneidmessern der eingangs genannten Art anzugeben, welches die bisherigen Nachteile im Stand der Technik überwindet, eine verbesserte Messergüte sicherstellt, einen hochwirtschaftlichen Betrieb einer Einrichtung zum Spanen von Holz ermöglicht und hohe Güte der Späne mit geringstem Abfall erreichen lässt.

Dieses Ziel wird bei einem gattungsgemäßen Verfahren dadurch erreicht, dass in einem ersten Schritt ein Vormaterial aus härtbarem Stahl oder aus einer härtbaren Legierung im weichgeglühten Zustand und mit bearbeiteter Oberfläche auf eine Temperatur von über der Raumtemperatur, jedoch unterhalb der Umwandlungstemperatur Ac₁, also im Bereich der kubisch-raumzentrierten Atomstruktur des Werkstoffes erwärmt und zu einem Profilrohteil mit im Querschnitt zumindest einem maßgenauen Führungspfad im Grundkörper und mit erhöhter Dicke zumindest eines Kantenbereiches, vorzugsweise mit überfülltem Kaliber gewalzt wird, worauf in einem zweiten Schritt, gegebenenfalls nach einer Zwischenlagerung, ein spanabhebendes Bearbeiten zumindest eines Kantenbereiches in Längsrichtung des Profilrohteiles mit der Maßgabe erfolgt, dass eine Schneidkante und zu dieser senkrecht gerichtet beabstandet Ritzkanten gebildet werden und der Schneidkantengrat abgezogen wird, wonach in einem dritten Schritt, gegebenenfalls mit einem zwischenliegenden Puffer die Kantenbereiche des Schneidmessers im Durchlauf gehärtet werden.

Die mit der Erfindung erreichten Vorteile sind im Wesentlichen darin begründet, dass im ersten Verfahrensschritt das Vormaterial quasi kaltverformt und auf eine Härte von mindestens 30 HRC verfestigt wird.

Der Ausdruck "kaltverformt" steht für eine Verformung bei einer Temperatur unterhalb des Ac₁-Punktes der Legierung.

Dem Profil-Rohteil werden dabei Passflächen vermittelt, welche eine exakte Positionierung des Messers sicherstellen.

Ein Walzen mit freier Breitung, gegebenenfalls in einem überfüllten Kaliber, bewirkt einen Materialfluss zu den Kantenbereichen hin, was sich vorteilhaft auf eine erreichte Schneid- und Ritzkanten-Güte bzw. -Haltbarkeit auswirkt.

Eine spanende Bearbeitung der Kantenbereiche des Rohteiles erfolgt erfindungsgemäß durch Fräsen. Einerseits erhöht sich bei einem Fräsen, auch bei wirtschaftlich hoher Spanabnahme, die Temperatur der Kante nicht über die Walztemperatur des Vormaterials, sodass keine Änderung der Verformungsstruktur im Rohteil eintritt, andererseits ergibt sich keine Änderung der Fräserform im Langzeitbetrieb, wodurch eine hohe Genauigkeit der Bearbeitungsflächen gewährleistet ist.

Weiters ist es wichtig, den Schneidkantengrad abzuziehen, um optimale Voraussetzungen für ein Erreichen bester Schneidkantengüte zu schaffen.

Bei einer Härtung nach einer Induktionserwärmung mit anschließendem forcierten Abkühlen und gegebenenfalls mit einem Anlassen des Härtegefüges im Durchlauf des Schneidmessers soll die Einhärttiefe mindestens 1.5 mm, jedoch unter 2.5 mm, sein, um eine Werkstoffhärte im Schneidenbereich von mindestens 58 HRC bei hoher Zähigkeit zu erreichen und im Übergang zum kaltverfestigen Teil des Messers die Zähigkeit weiter ansteigt und eine Ausbruchsgefahr der Schneide im harten Betrieb minimiert ist.

Die Schneidmesser werden mit Vorteil erfindungsgemäß vom Vormaterial bis nach einem Härten der Schneiden in Form von Vielfachlängen im Durchlauf in den jeweiligen drei Schritten hergestellt und im Anschluss daran eine Teilung in Einzelmesser vorgenommen. Dieses Herstellungsverfahren sichert ein gleichbleibend überragendes Güteniveau und hohe Wirtschaftlichkeit der erfindungsgemäßen Messer.

Ferner ist es Aufgabe der Erfindung, ein Einweg-Schneidmesser zum Spanen von Holz zu schaffen, welches in einer Einrichtung dafür passgenau positionierbar ist, sowohl Schneidkanten als auch Ritzkanten in einteiliger Form hat sowie beste Gebrauchseigenschaften bei langer Lebensdauer insbesondere bei gleicher Abnutzung der Schneid- und Ritzkantenprofile aufweist.

Diese Aufgabe wird dadurch gelöst, dass ein Einweg-Schneidmesser mit profiliertem Querschnitt umfassend einen Grundkörper mit in Längsrichtung mindestens einem maßgenauen Führungspfad sowie diesem gegenüberliegend mindestens einer Druckfläche und mindestens einem zum Führungspfad beabstandeten Kantenbereich mit einer Schneidkante aufweist, wobei von der Schneidkante mit einem Schneidwinkel β von 8 - 25° senkrecht zu dieser in Längsrichtung beabstandet Ritzkanten abragen, welche senkrecht zur Freifläche der Schneidkante gemessen einen Keilwinkel α von 25 - 33° aufweisen und die Schneidkanten-und Ritzkanten-Bereiche bis zu einer Tiefe von mindestens 1.5 mm eine Härte von mindestens 58 bis 63 HRC haben, wobei das Schneidmesser die Schneidkante und die Ritzkanten in einteiliger Form ausbildet.

Nach einer bevorzugten Ausführungsform ist erfindungsgemäß vorgesehen, dass die Messerform aus einem walzharten Profilrohteil mit einer Härte von mindestens 30 HRC spanabhebend durch Fräsen der Kantenbereiche hergestellt ist. Durch eine Werkstoffhärte des Grundkörpers von höher als 30 HRC wird eine gewünschte Stabilität des Messers im praktischen Spaneinsatz erreicht, wobei eine Spanabnahme durch Fräsen wirtschaftlich erfolgen kann.

Wenn weiters die Ritzkante in ihrer Längserstreckung zur Schneidkante in Richtung der Freifläche senkrecht oder nacheilend ausgebildet ist, kann jeweils die zur zerspanende Holzart oder die Holzbeschaffenheit zur Herstellung hochwertiger Späne berücksichtigt werden.

Für eine günstige Spanseparierung, aber auch für eine verminderte Schneidenbelastung kann vorgesehen sein, dass die Ritzkante von der Schneidkante abragt oder aus der Freifläche mit einem Abstand von bis zu 0.8 mm von der Schneidkante ausragend gebildet sein.

Mit Vorteil sind erfindungsgemäß die Schneidmesser aus einem Kaltarbeitsstahl mit einer Zusammensetzung gemäß Stahl-Eisen-Liste, Nummernklassen 20 bis 23 oder aus einem Schnellarbeitsstahl gemäß Nummernklasse 33 gebildet, so dass durch eine Werkstoffwahl ein hochwirtschaftlicher Einsatz bei einer Zerspanung im Abhängigkeit von der Holzeigenschaft möglich ist.

Wenn in vorteilhafter Weise die Oberfläche im Schneidenbereich des Schneidmessers zumindest teilsweise beschichtet ist, kann eine besonders lange Lebensdauer desselben im harten Einsatz erreicht werden. Als Beschichtungsmethoden sind u.a. die CVD- und PVD-Verfahren vorgesehen, wobei die Oberflächenschichten aus Reinmetall, aus Karbid, Oxid, Nitrid oder deren Mischformen von insbesondere Chrom und Titan gebildet sein können.

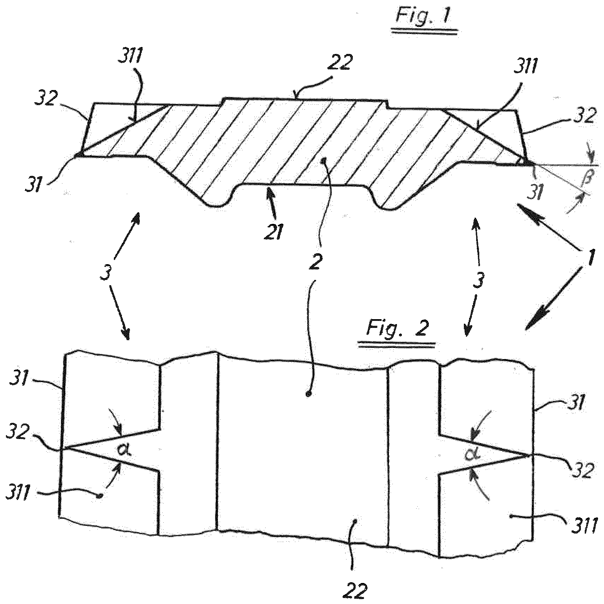

Ein Einweg-Messer, welches nur eine Ausführungsform der Erfindung darstellt, ist in den Zeichnungen Fig.1, Fig. 2 gezeigt und wird nachfolgend beschrieben.

Die Zuordnung der Teile soll eine nachfolgende Bezugszeichenliste erleichtern.
- 1: Einweg-Schneidmesser
- 2: Grundkörper
- 21: Führungspfad
- 22: Druckfläche
- 3: Kantenbereich
- 31: Schneidkanten
- 311: Freifläche
- 32: Ritzkanten
- α: Keilwinkel der Ritzkante
- β: Keilwinkel der Schneidkante

Fig. 1 zeigt einen Querschnitt eines Einweg-Schneidmessers 1 mit einem Grundkörper 2 und zwei Kantenbereichen 3, also in einer Ausbildungsform als Wendeschneidmesser.

In einem ersten Schritt wird beispielsweise aus einem runden Vormaterial ( nicht dargestellt) durch Kaltwalzung ein Grundkörper 2 mit einem Führungspfad 21 und einer gegenüberliegenden Druckfläche 22 im Kaliber geformt, wobei durch einen Materialfluss infolge einer freien Breitung des Vormaterials im Walzkaliber Kantenbereiche 3 gebildet werden.

Im zweiten Schritt einer Herstellung eines Einweg-Schneidmessers erfolgt durch ein stellenweises Fräsen der Kantenbereiche 3 eine Ausbildung von Schneidkanten 31 mit einem Keilwinkel β von 26° bis 34° und abragend von den Freiflächen 311 ein Ausformen von Ritzkanten 32.

In Fig. 2 ist eine Draufsicht auf das im Querschnitt in Fig. 1 dargestellte Einweg-Wendeschneidmesser 1 gezeigt.

Vom Grundkörper 2 mit einer Druckfläche 22 ragen in Querrichtung Kantenbereiche 3 ab, in welchen Schneidkanten 31 gebildet sind. Von den Freiflächen 331 der Schneidkanten ragen senkrecht zu den Schneidkanten 31 Ritzkanten 32 mit einem Keilwinkel α von 25° bis 33° ab. Die die Ritzkante 32 bildenden Seitenflächen können gerade oder gekrümmt ausgebildet sein.

## Patentansprüche

1. Verfahren zur Herstellung von Einweg-Schneidmessern (1) mit profiliertem Querschnitt für eine Einrichtung zum Spanen von Holz, **dadurch gekennzeichnet, dass** in einem ersten Schritt ein Vormaterial aus härtbarem Stahl oder aus einer härtbaren Legierung im weichgeglühten Zustand und mit bearbeiteter Oberfläche auf eine Temperatur von über der Raumtemperatur, jedoch unterhalb der Umwandlungstemperatur Ac₁, also im Bereich der kubisch-raumzentrierten Atomstruktur des Werkstoffes erwärmt und zu einem Profilrohteil mit im Querschnitt zumindest einem maßgenauen Führungspfad im Grundkörper (2) und mit erhöhter Dicke zumindest eines Kantenbereiches, vorzugsweise mit überfülltem Kaliber gewalzt wird, worauf in einem zweiten Schritt, gegebenenfalls nach einer Zwischenlagerung, ein spanabhebendes Bearbeiten zumindest eines Kantenbereiches (3) in Längsrichtung des Profilrohteiles mit der Maßgabe erfolgt, dass eine Schneidkante (31) und zu dieser senkrecht gerichtet beabstandet Ritzkanten (32) gebildet werden und der Schneidkantengrat abgezogen wird, wonach in einem dritten Schritt, gegebenenfalls mit einem zwischenliegenden Puffer die Kantenbereiche (3) des Schneidmessers im Durchlauf gehärtet werden.

2. Verfahren nach Anspruch 1, **dadurch gekennzeichnet, dass** als Vormaterial für ein Kaliberwalzen eines Profilrohteiles ein Stab oder Draht mit rundem Querschnitt eingesetzt wird und dass eine Schnellerwärmung desselben durch elektrische Induktion erfolgt.

3. Verfahren nach Anspruch 1 oder 2, **dadurch gekennzeichnet, dass** im zweiten Schritt nach einer Bearbeitung mittels Fräsens des Kantenbereiches (3) des Profilrohlings unter Ausformung mindestens einer Schneidkante (31) mit einer Freifläche (311) und von dieser beabstandet abragende Ritzkanten (32) des Messers von dem der Freifläche gegenüberliegenden Spanflächenbereich mittels eines Werkzeuges, insbesondere Keramikwerkzeuges, der Fräsgrat abgezogen wird.

4. Verfahren nach einem der Ansprüche 1 bis 3, **dadurch gekennzeichnet, dass** bei unterschiedlichem und/oder intermittierendem Vorschub des Profilrohlings bei der Fräsbearbeitung bzw. im zweiten Schritt und einem kontinuierlichen Vorschub beim Härten der Schneidkanten im dritten Schritt der Herstellung des Schneidmessers eine die Vorschubunterschiede ausgleichende Puffereinrichtung eingeschaltet wird.

5. Einweg-Schneidmesser (1) mit profiliertem Querschnitt für Einrichtungen zum Spanen von Holz, umfassend einen Grundkörper (2) mit in Längsrichtung mindestens einem maßgenauen Führungspfad (21) sowie diesem gegenüberliegend mindestens einer Druckfläche (22) und mindestens einem zum Führungspfad (21) beabstandeten Kantenbereich (3) mit einer Schneidkante (31),
**dadurch gekennzeichnet, dass** von der Schneidkante (31) mit einem Keilwinkel (β) von 26° bis 34° senkrecht zu dieser in Längsrichtung beabstandet Ritzkanten (32) abragen, welche senkrecht zur Freifläche (311) der Schneidkante (31) gemessen einen Keilwinkel (α) von 25° bis 33° aufweisen und die Schneidkanten- und Ritzkanten-Bereiche bis zu einer Tiefe von mindestens 1.5 mm eine Härte von mindestens 58 bis zu 63 HRC haben, wobei das Schneidmesser (1) die Schneidkante (31) und die Ritzkanten (32) in einteiliger Form ausbildet.

6. Schneidmesser (1) nach Anspruch 5,
**dadurch gekennzeichnet, dass** die Messerform aus einem walzharten Profilrohteil mit einer Härte von mindestens 30 HRC spanabhebend durch Fräsen der Kantenbereiche (3) hergestellt ist.

7. Schneidmesser (1) nach Anspruch 5 oder 6,
**dadurch gekennzeichnet, dass** die Ritzkante (32) in ihrer Längserstreckung zur Schneidkante (31) in Richtung der Freifläche (311) senkrecht oder nacheilend ausgebildet ist.

8. Schneidmesser nach einem der Ansprüche 5 bis 7,
**dadurch gekennzeichnet,**
**dass** die Ritzkante (32) von der Schneidkante (31) abragt oder aus der Freifläche (311) mit einem Abstand von bis zu 0.8 mm von der Schneidkante (31) ausragend gebildet ist.

9. Schneidmesser nach einem der Ansprüche 5 bis 8, gebildet aus einem Kaltarbeitsstahl mit einer Zusammensetzung gemäß Stahl-Eisen-Liste Nummernklassen 20 bis 23 oder aus einem Schnellarbeitsstahl gemäß Nummernklasse 33.

10. Schneidmesser nach einem der Ansprüche 5 bis 9,
**dadurch gekennzeichnet, dass** der Messerwerkstoff eine anlassbeständige Eisenbasislegierung ist und die Oberfläche im Schneidebereich zumindest teilweise eine Beschichtung trägt

## Claims

1. Process for the preparation of disposable cutting blades (1) with profiled cross section for an equipment for the chipping of wood, **characterized in that**
in a first step a raw material consisting of curable steel or of a curable alloy in the soft tempered state and with machined surface is heated to a temperature of above room temperature, but below transformation temperature Ac₁, i.e. in the zone of the body centred cubic atomic structure of the raw material, and is rolled to yield a profiled raw part with at least one dimensionally accurate guiding track in the cross section in the base body (2) and with increased thickness of at least one edge area, preferably with overfilled bore, following which
in a second step, if necessary following an interim storage, a chip cutting machining of at least one edge area (3) in longitudinal direction of the profiled raw part takes place with the provision that a cutting edge (31) and carving edges (32) perpendicularly distanced thereto are formed and that the cutting edge burr is removed, following which in a third step, if necessary with an intermediate buffer, the edge areas (3) of the cutting blade are cured during transport.

2. Process according to claim 1,
**characterized in that** a rod or a wire with a circular diameter is used as raw material for bore rolling of a profiled raw part and that a rapid heating thereof takes place by electrical induction.

3. Process according to claim 1 or 2,
**characterized in that** in the second step following a machining by milling the edge area (3) of the profiled raw part under formation of at least one cutting edge (31) having a free surface (311) and spaced apart therefrom protruding carving edges (32) of the blade from the chip surface area opposite the free surface the milling burr is taken off by means of a tool, in particular a ceramic tool.

4. Process according to one of claims 1 to 3,
**characterized in that** in case of differing or intermitting feed of the profile raw part during milling processing or in the second step and a continuous feed during curing of the cutting edges in the third step of the manufacture of the cutting blade a buffer device balancing the feed differences is switched on.

5. Disposable cutting blade (1) with a profiled cross section for equipments for chipping wood, comprising a base body (2) with at least one dimensionally accurate guiding track (21) in longitudinal direction as well as at least one pressure surface (22) opposite thereto and at least one edge area (3) with a cutting edge (31) distanced from the guiding track (21),
**characterized in that** from the cutting edges (31) with a wedge angle (β) of from 26° to 34° and perpendicular thereto and spaced apart in longitudinal direction carving edges (32) protrude, which exhibit a wedge angle α of 25 - 33° when measured perpendicularly to the free surface (311) of the cutting edge (31), and the cutting edge and carving edge areas up to a depth of at least 1.5 mm exhibit a hardness of at least 58 to 63 HRC, wherein the cutting blade (1) forms the cutting edge (31) and the carving edges (32) in one piece.

6. Cutting blade (1) according to claim 5,
**characterized in that** the form of the blade is produced from a hard-as-rolled profile raw part having a hardness of at least 30 HRC machining by milling the edge areas (3).

7. Cutting blade (1) according to claim 5 or 6,
**characterized in that** the carving edge (32) in its longitudinal extension in the direction of the free surface (311) is formed perpendicularly or trailing to the cutting edge (31).

8. Cutting blade (1) according to one of claims 5 to 7,
**characterized in that** the carving blade (32) protrudes away from the cutting blade (31) or that it is formed protruding from the free surface (311) with a distance of up to 0.8 mm from the cutting blade (31).

9. Cutting blade (1) according to one of claims 5 to 8,
**characterized in that** the cutting blades are made of a cold worked steel having a composition according to steel-iron-list, number classes 20 to 23 or from a high-speed steel according to number class 33.

10. Cutting blade (1) according to one of claims 5 to 9,
**characterized in that** the blade material is an alloy based on iron with tempering resistance and that the surface in the cutting area at least partly carries a coating.

## Revendications

1. Procédé pour la fabrication de lames de coupe jetables (1) ayant une section transversale de profilé pour un dispositif pour l'usinage du bois, **caractérisé en ce que** dans une première étape, un matériau de départ d'acier durcissable ou d'un alliage durcissable à l'état recuit et avec une surface usinée est chauffé à une température comprise entre au-delà de la température ambiante, mais au-dessous de la température de transition Ac₁, à savoir dans la zone de la structure atomique cubique centrée du matériau et est roulé en ébauche de profilé avec en section transversale au moins un chemin de guidage de dimensions précises dans le corps de base (2) et avec une épaisseur augmentée d'au moins une partie de bord, de préférence avec un calibre rembourré, après quoi dans une deuxième étape, éventuellement après un stockage intermédiaire, un usinage d'au moins une zone de bord (3) dans la direction longitudinale de l'ébauche de profilé a lieu à condition qu'un bord tranchant (31) et partant en direction perpendiculaire et éloigné à une distance de celui-ci des bords de façonnage (32) sont formés, et la crête du bord tranchant est retiré, après quoi, dans une troisième étape, le cas échéant avec un tampon intermédiaire les parties de bord de la lame sont trempées dans la course.

2. Procédé selon la revendication 1,
**caractérisé en ce que** en tant que matériau pour un calibre de laminage d'un ébauche de profilé une tige ou un fil métallique avec une section transversale ronde est inséré et **en ce qu'**un chauffage rapide de celle ou celui-ci est réalisé par induction électrique.

3. Procédé selon la revendication 1 ou 2, **caractérisé en ce que** durant la deuxième étape, après un usinage par fraisage de la zone de bord (3) de l'ébauche de profilé pour former au moins un bord tranchant (31) avec une surface libre (311) et espacé de celle-ci respectivement des bords de façonnage (32) faisant saillie, de la lame, à partir de la région de la surface de serrage située à l'opposé de la surface libre, la crête de fraisage est retirée au moyen d'un outil, en particulier d'un outil céramique.

4. Procédé selon l'une des revendications 1 à 3, **caractérisé en ce que** au cas d'une alimentation différente et / ou par intermittence de l'ébauche de profilé pendant l'usinage par fraisage ou dans la deuxième étape et d'une alimentation continue pendant le durcissement des bords tranchants dans la troisième étape de la fabrication de la lame de coupe un dispositif de tampon équilibrant les différences d'alimentation est allumé.

5. Lame de coupe à usage unique (1) avec une section transversale de profilé pour dispositifs destinés à l'usinage de bois, comprenant un corps de base (2) avec, espacé dans la direction longitudinale, au moins un chemin de guidage (21) de dimensions précises et opposée à celui-ci au moins une surface de pression (22) et au moins une zone marginale (3) espacée du chemin de guidage (21) avec un bord tranchant (31), **caractérisé en ce qu'**a partir du bord tranchant (31) avec un angle de coin (de β) de 26° à 34° espacé perpendiculairement à celui-ci en direction longitudinale des bords de faconnage (32) font saillie, qui, mesuré perpendiculairement à la surface libre (311) du bord tranchant (31), présentent un angle de coin (de α) de 25° à 33° et la zone de bord tranchant et de bord de façonnage à une profondeur d'au moins 1,5 mm ont une dureté de 58 à 63 HRC, dans laquelle la lame de coupe (1) forme le bord tranchant (31) et les bords de façonnage (32) en une pièce.

6. Lame de coupe (1) selon la revendication 5,
**caractérisé en ce que** la forme de lame est réalisée à partir d'un ébauche de profilé dur tel que laminé ayant une dureté d'au moins HRC 30 est réalisée par usinage par fraisage des régions de bord (3)

7. Lame de coupe (1) selon la revendication 5 ou 6,
**caractérisé en ce que** le bord de façonnage (32) dans son étendue longitudinale au bord tranchant (31) dans la direction de la surface libre (311) est formé perpendiculairement ou en retard.

8. Lame de coupe selon une des revendications 5 à 7,
**caractérisé en ce que** le bord de façonnage (32) fait saillie à partir du bord tranchant (31) ou de la surface libre (311) avec un espacement allant jusqu'à 0,8 mm à partir du bord tranchant (31).

9. Lame de coupe selon l'une des revendications 5 à 8,
formé d'un acier de travail à froid avec une composition selon la liste acier-fer, nombre de classes 20 à 23, ou à partir d'un acier à haute vitesse selon le nombre de classe 33.

10. Lame de coupe selon l'une des revendications 5 à 9, **caractérisé en ce que** le matériau de lame est un alliage à base de fer de résistance au revenu, et la surface dans la zone de coupe porte un revêtement au moins partiellement.
